(19)

Europäisches Patentamt

European Patent Office

Office européen des brevets

(11) **EP 4 458 517 B1**

(12) **EUROPEAN PATENT SPECIFICATION**

(45) Date of publication and mention
of the grant of the patent:
**28.01.2026 Bulletin 2026/05**

(21) Application number: **24169211.0**

(22) Date of filing: **09.04.2024**

(51) International Patent Classification (IPC):
**B25B 23/14** *(2006.01)*  **B23P 19/06** *(2006.01)*
**B25B 23/147** *(2006.01)*  **G01L 5/24** *(2006.01)*
**G06N 20/00** *(2019.01)*

(52) Cooperative Patent Classification (CPC):
**B25B 23/147; B25B 23/14; G01L 5/24; G06N 3/08;
G06N 20/00**

(54) **ML ESTIMATION OF TIGHTENING CLASSES UTILIZING NORMALIZATION**

ML-SCHÄTZUNG VON STRAFFUNGSKLASSEN UNTER VERWENDUNG EINER
NORMALISIERUNG

ESTIMATION ML DE CLASSES DE SERRAGE UTILISANT LA NORMALISATION

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **04.05.2023 SE 2330201**

(43) Date of publication of application:
**06.11.2024 Bulletin 2024/45**

(73) Proprietor: **Atlas Copco Industrial Technique AB
105 23 Stockholm (SE)**

(72) Inventors:
 • **Aldenfalk, Staffan
 171 55 Solna (SE)**
 • **Tang, Lifei
 131 48 Nacka (SE)**
 • **Wilkman, Dennis
 118 21 Stockholm (SE)**

(74) Representative: **Atlas Copco Industrial Technique
AB
105 23 Stockholm (SE)**

(56) References cited:
**EP-A1- 3 623 108**

 • **CAO XIAOPENG ET AL: "Anomaly Detection for
 Screw Tightening Timing Data with LSTM
 Recurrent Neural Network", 2019 15TH
 INTERNATIONAL CONFERENCE ON MOBILE
 AD-HOC AND SENSOR NETWORKS (MSN), IEEE,
 11 December 2019 (2019-12-11), pages 348 - 352,
 XP033756548, DOI: 10.1109/
 MSN48538.2019.00072**
 • **RIBEIRO DIOGO ET AL: "A Comparison of
 Anomaly Detection Methods for Industrial Screw
 Tightening", 11 September 2021, 20210911,
 PAGE(S) 485 - 500, XP047607633**

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

## Description

### TECHNICAL FIELD

The present disclosure relates to a method for enabling determination of a tightening class of a tightening operation performed by a tightening tool, and a device performing the method.

Further, a computer program is provided comprising computer-executable instructions for causing the device to perform steps of the method when the computer-executable instructions are executed on a processing unit included in the device.

Moreover, a computer program product is provided comprising a computer readable medium, the computer readable medium having the computer program embodied thereon.

### BACKGROUND

During tightening of a fastener such as a bolt or a screw using a tightening tool, there are several undesired tightening results that may occur for the bolt or screw being tightened.

Analysing sensor data from the tightening tool provides valuable insight as regards the tightening result. Analytical models may be developed to determine the tightening result based on sensor data from the tightening tool.

However, whether or not a tightening result is correct may be difficult to determine by a human operator or a machine, and is further burdensome and time consuming.

To this end, machine-learning (ML) may be used to analyse the torque and angles tightening results. However, appropriate training of the ML model is crucial for the ML model to subsequently perform accurate tightening estimations.

Anomaly Detection for Screw Tightening Timing Data With LSTM Recurrent Neural Network" by Cao Xiaopeng et al., proposes a model based on LSTM that can automatically analyze the quality of the tightening curve, which improves timeliness and accuracy. This document discloses a method according to the preamble of claim 1 and a device according to the preamble of claim 14.

### SUMMARY

One objective is to solve, or at least mitigate, this problem in the art and thus to provide an improved method for enabling determination of a tightening class of a tightening operation performed by a tightening tool.

In a first aspect, the invention provides a method, according to claim 1, for enabling determination of a tightening class of a tightening operation performed by a tightening tool. The method comprises acquiring a set of observed torque and angle values for a fastener having been tightened by the tightening tool, identifying, from the acquired set of observed torque and angle values, a rundown phase and an end-tightening phase of the tightening of the fastener, normalizing the torque values of the end-tightening phase with a determined torque value range of the end-tightening phase and the angle values of the end-tightening phase with a determined angle value range of the end-tightening phase, and training a machine-learning model with the normalized torque and angle values of the end-tightening phase and at least one tightening class associated with the normalized torque and angle values of the end-tightening phase, the tightening class identifying a type of tightening operation having been applied to the fastener.

In a second aspect, the invention provides a device, according to claim 1, that is configured to enable determination of a tightening class of a tightening operation performed by a tightening tool. The device comprises a processing unit operative to cause the device to acquire a set of observed torque and angle values for a fastener having been tightened by the tightening tool, identify, from the acquired set of observed torque and angle values, a rundown phase and an end-tightening phase of the tightening of the fastener, normalize the torque values of the end-tightening phase with a determined torque value range of the end-tightening phase and the angle values of the end-tightening phase with a determined angle value range of the end-tightening phase, and to train a machine-learning model with the normalized torque and angle values of the end-tightening phase and at least one tightening class associated with the normalized torque and angle values of the end-tightening phase, the tightening class identifying a type of tightening operation having been applied to the fastener.

By separating the rundown phase torque and angle values from the tightening phase torque and angle values and normalizing the two data subsets separately, the resolution of the normalization becomes far greater, in particular for the angle values of the end-tightening phase which typically would be normalized over a couple of tens of angle values, say 30°-40°, rather than over a couple of thousands of angle values constituting the rundown phase, say 3000°-4000°.

In an embodiment, the trained machine-learning model is further supplied with a further acquired and normalized set of observed end-tightening phase torque and angle values for a fastener having been tightened by the tightening tool, wherein the trained machine-learning model outputs at least one estimated tightening class for the supplied further normalized set of observed end-tightening phase torque and angle values.

In an embodiment, it is further determined whether or not the acquired torque values exceed a predetermined torque threshold value, and if so the acquired torque values and corresponding angle values are determined to pertain to an end-tightening phase, and if not the acquired torque values and corresponding angle values are determined to pertain to a rundown phase, upon identifying, from the acquired set of observed torque and angle values, a rundown phase and an end-tightening phase of the tightening of the fastener.

In an embodiment, the normalizing further comprises normalizing the torque values of the rundown phase with a determined torque value range of the rundown phase and the angle values of the rundown phase with a determined angle value range of the rundown phase; and the training of the machine-learning model further comprises training the machine-learning model with the normalized torque and angle values of the rundown phase and at least one tightening class associated with the normalized torque and angle values of the rundown phase.

In an embodiment, the supplying of the trained machine-learning model with a further acquired and normalized set of observed end-tightening phase torque and angle values further comprises supplying the trained machine-learning model with a further acquired and normalized set of observed rundown phase torque and angle values for a fastener having been tightened by the tightening tool, wherein the trained machine-learning model outputs at least one estimated tightening class for the supplied further normalized set of observed rundown phase torque and angle values.

In an embodiment, the training of the machine-learning model further comprises training a first machine-learning model with the normalized torque and angle values of the end-tightening phase and at least one tightening class associated with the normalized torque and angle values of the end-tightening phase, and training a second machine-learning model with the normalized torque and angle values of the rundown phase and at least one tightening class associated with the normalized torque and angle values of the rundown phase.

In an embodiment, the supplying of the trained machine-learning model with a further acquired and normalized set of observed end-tightening phase torque and angle values further comprises supplying the trained first machine-learning model with the further acquired and normalized set of observed end-tightening phase torque and angle values, wherein the trained first machine-learning model outputs at least one estimated tightening class for the supplied further normalized set of observed end-tightening phase torque and angle values, and supplying the trained second machine-learning model with the further acquired and normalized set of observed rundown phase torque and angle values, wherein the trained second machine-learning model outputs at least one estimated tightening class for the supplied further normalized set of observed rundown phase torque and angle values.

In an embodiment, the determined torque value range and/or angle value range is divided into smaller sub-ranges utilized for the normalization.

In an embodiment, the normalization being performed comprises min-max normalization.

In an embodiment, an alert is provided indicating the at least one estimated tightening class.

In an embodiment, the alert is provided to an operator of the tightening tool, to the tightening tool itself, to a supervision control room or to a remote cloud function.

In a third aspect, a computer program is provided comprising computer-executable instructions for causing the device to perform steps recited in the method of the first aspect when the computer-executable instructions are executed on a processing unit included in the device.

In a fourth aspect, a computer program product is provided comprising a computer readable medium, the computer readable medium having the computer program according to the third aspect embodied thereon.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

## BRIEF DESCRIPTION OF THE DRAWINGS

Aspects and embodiments are now described, by way of example, with reference to the accompanying drawings, in which:

Figure 1 illustrates a tightening tool configured to apply a torque to a fastener, in which tool embodiments may be implemented;

Figures 2a-d illustrates different types of undesired tightening operations which may be performed by the tool during a tightening program;

Figure 3 illustrates training of an ML model;

Figure 4 illustrates utilizing the trained ML model of Figure 3 for estimation of tightening classes;

Figure 5 shows a flowchart illustrating a method for determining a tightening class of a tightening operation performed by the tightening tool;

Figures 6a and b illustrate a rundown phase and an end-tightening phase of a trace;

Figure 7 shows a flowchart illustrating a method of estimating tightening classes according to an embodiment;

Figure 8 illustrates training of an ML model according to an embodiment;

Figure 9 illustrates utilizing the trained ML model of Figure 8 for estimation of tightening classes according to an embodiment;

Figure 10 shows a flowchart illustrating a method of estimating tightening classes according to another embodiment;

Figure 11 illustrates training of ML models according to a further embodiment; and

Figure 12 illustrates utilizing the trained ML models of Figure 11 for estimation of tightening classes according to an embodiment.

## DETAILED DESCRIPTION

The aspects of the present disclosure will now be described more fully hereinafter with reference to the accompanying drawings, in which certain embodiments of the invention are shown.

These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

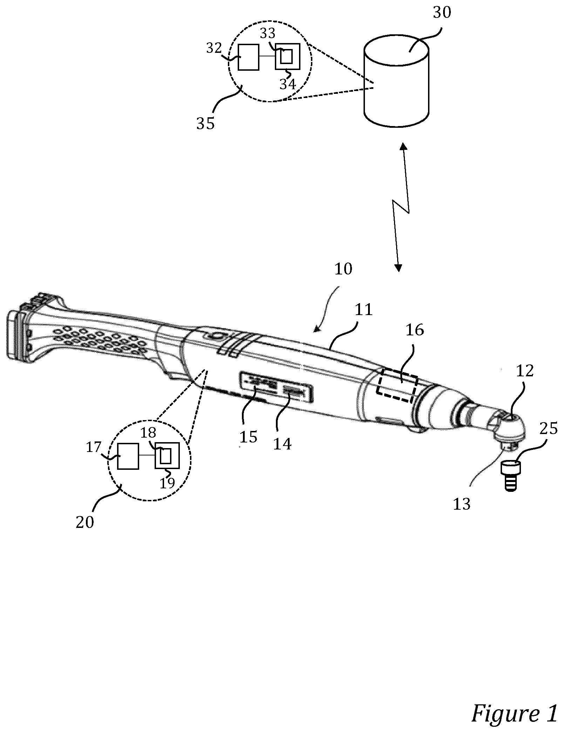

Figure 1 illustrates an industrial tool in the form of a tightening tool 10 configured to apply a torque to a fastener such as a bolt 25 for tightening a joint, for which tool embodiments may be implemented.

The tightening tool 10 may be cordless or electrically powered via a cord and has a main body 11 and a tool head 12. The tool head 12 has an output shaft 13 with a socket (not shown) configured to be rotatably driven by an electric motor arranged inside the main body 11 to apply the torque to the bolt 25.

The tightening tool 10 may be arranged with a display 14 via which an operator of the tool 10 may be presented with information relating to operation of the tool 10, and an interface 15 via which the operator may input data to the tool 10.

The tightening tool 10 may further be arranged with communicating capability in the form of a radio transmitter/receiver 16 for wirelessly transmitting operational data, such as applied torque, to a remotely located controller such as a cloud server 30 or a device such as a server executing on the premises. Alternatively, communication between the tool 10 and the controller 30 may be undertaken via a wired connection.

Thus, the tool 10 may for instance communicate measured operational data to the controller 30 for further evaluation while the controller 30 e.g. may send operational settings to be applied by the tool 10 or instructions to be displayed to the operator via the display 14, or even automatically configure the tool 10. As is understood, the method of determining a configuration of the tool 10 according to embodiments may be performed in the tool 10 or in the cloud server 30 (or even in combination where some steps are performed in one device and others are performed in the other). Thus, the tool 10 is typically equipped with a control device 20 and the cloud server 30 comprises a similar control device 35 housing the same or similar data processing components, as will be described in the following.

The steps of the method to be described in the following as performed by the tool 10 and/or the cloud server 30 are in practice performed by a control device 20 and/or 35, respectively, comprising a processing unit 17, 32 embodied in the form of one or more microprocessors arranged to execute a computer program 18, 33 downloaded to a storage medium 19, 34 associated with the microprocessor, such as a Random Access Memory (RAM), a Flash memory or a hard disk drive. The processing unit 17, 32 is arranged to cause the tool 10 and/or cloud server 30 to carry out the method according to embodiments when the appropriate computer program 18. 33 comprising computer-executable instructions is downloaded to the storage medium 19, 34 and executed by the processing unit 17, 32. The storage medium 19, 34 may also be a computer program product comprising the computer program 18, 33. Alternatively, the computer program 18 may be transferred to the storage medium 19, 34 by means of a suitable computer program product, such as a Digital Versatile Disc (DVD) or a memory stick. As a further alternative, the computer program 18, 33 may be downloaded to the storage medium 19, 34 over a network. The processing unit 17, 32 may alternatively be embodied in the form of a digital signal processor (DSP), an application specific integrated circuit (ASIC), a field-programmable gate array (FPGA), a complex programmable logic device (CPLD), etc. The control device 20, 35 is communicatively connected to the interface for external communication, for instance from the tool 10 to the cloud server 30 and vice versa.

The control device 20 may be arranged inside the tightening tool 10 or in connection to the tool 10, for instance as a control device 20 attached to an external side of the main body 11 of the tool 10.

The processing unit 17 may be in communicative connection with one or more sensors (not shown) for measuring the torque applied to the bolt 25 and a rotation angle of the output shaft 13 of the tightening tool 10 upon applying the torque.

Now upon an operator using the tightening tool 10 to tighten a fastener such as the bolt 25, it is important that the tightening operation is performed correctly for the tightened bolt 25 to maintain its fastening durability. If not, there is a risk that the tightening becomes inferior which in worst case may cause the bolt 25 to unscrew. Thus, it is crucial that the bolt 25 is correctly tightened and if not, it is desirable to attain an indication accordingly such that the operator may utilize the tool 10 to correctly retighten the bolt 25. Commonly, an incorrect tightening is referred to as a not ok (NOK) tightening, while a correct tightening conversely is referred to as OK.

One such tightening operation performed by the tool 10 (and its human operator) is referred to as disengagement. During disengagement, the torque values suddenly drop to zero before completion of the tightening program being performed.

If for instance the torque values suddenly drop to zero before completion of the tightening, disengagement between the output shaft 13 (and socket) and the bolt 25 may have occurred. This may be caused by operator behaviour, worn out tool parts and/or fasteners, incorrect tool programming, etc.

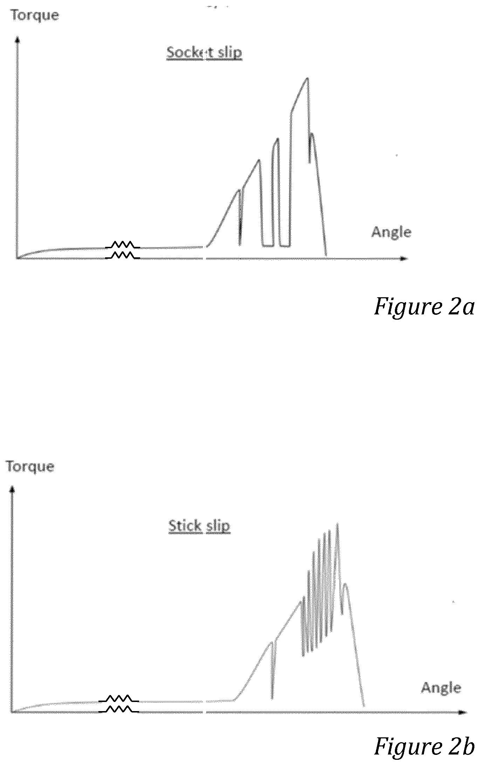

Figures 2a-d illustrate a plurality of undesired tightening operations being performed by the tool 10. The combination of the torque and angle values for a tightening program being performed is sometimes referred to as a *trace.*

As indicated in the traces of Figures 2a-d, the x axis (i.e. the angle scale) is compressed for illustrational reasons since the so-called rundown phase where the torque may be relatively constant for hundreds or even thousands of degrees (say 3000-4000°) of the rotational angle of the output shaft 13, while the so-called end-tightening phase where the torque increases rapidly only may last for an angular interval in the tens of degrees, say 20-30°. This will be discussed in further detail hereinbelow.

Figure 2a illustrates a particular type of tightening operation commonly referred to as socket slip, which may occur when the torque value increases and decreases at periodical angle intervals.

Figure 2b illustrates another particular type of tightening operation commonly referred to as stick slip, which may occur when the torque values fluctuate at a high frequency.

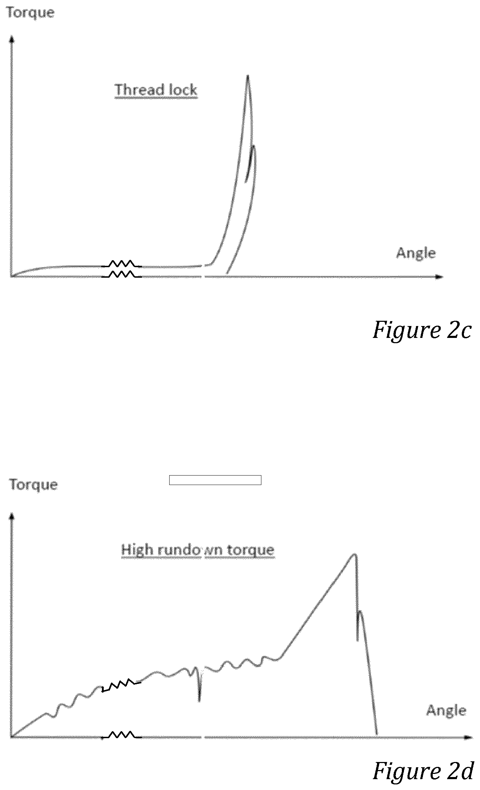

Figure 2c illustrates another particular type of tightening operation; a so-called thread lock which may occur when the applied torque reaches a target torque immediately after a rundown phase. This is typically caused by the threads of the bolt 25 that is tightened suddenly locking, for example because of the bolt 25 being entered into the thread at an angle or if the dimensions are not correct.

Finally, Figure 2d illustrates a further particular type of tightening operation referred to as high rundown torque which may occur when the applied torque reaches a target torque during a rundown phase. This is typically caused by friction in the thread of the bolt 25 being higher than normal, for example because of the bolt 25 having an incorrect dimension, wrong thread coating or that the bolt 25 was slanted upon entering the thread.

As is understood, these are examples of incorrect tightening operations being performed by the tool 10, which preferably should be avoided. However, should they still occur, it is desirable that an operator or some supervision function is informed thereof.

Hence, in an embodiment, a trained machine-learning (ML) model is used to determine from acquired torque and angle values whether or not an incorrect tightening operation has been performed and if so, which particular type of tightening operation has been performed, i.e. whether it is one of the above-mentioned "disengage", "socket slip", "stick slip", "thread lock" and "high rundown torque" (or any other identified tightening operation. In practice, there are numerous different types other than those illustrates in Figures 2a-d).

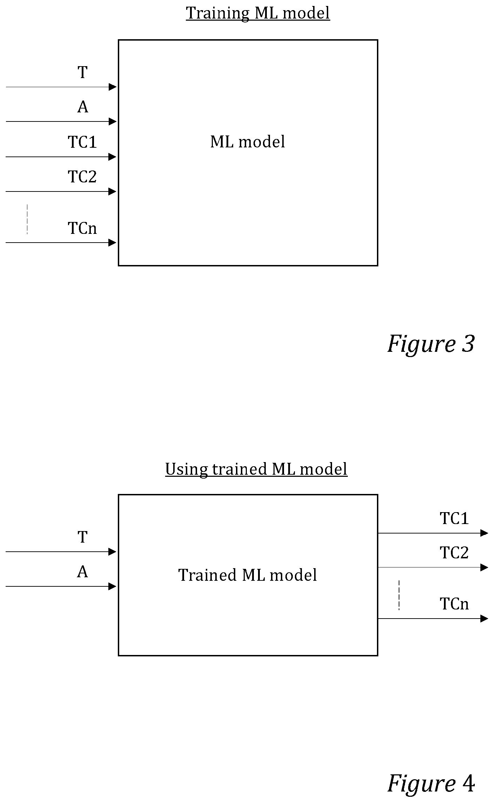

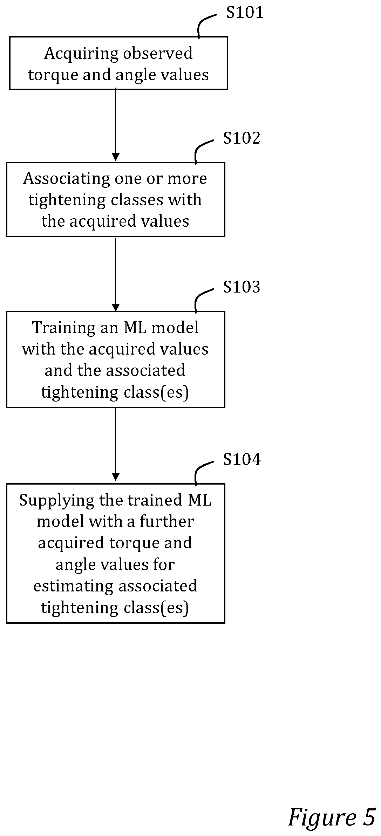

Figure 3 illustrates the training of the ML model according to an example, while Figure 4 illustrates utilizing the trained ML model to estimate a tightening class for a supplied set of torque and angle values during a tightening operation. Reference is further made to Figure 5 showing a flowchart illustrating a method for determining a tightening class of a tightening operation performed by the tightening tool 10.

Thus, during a training phase, one or more sets of observed torque values T and angle values A for bolts 25 having been tightened by the tightening tool 10 is acquired in step S101. Thus, these are the torque and angle values previously illustrated with reference to the graphs of Figures 2a-d.

For instance, each set may comprise, say, a hundred torque values and corresponding angle values acquired by the processing unit 17 upon the tightening tool 10 performing a tightening program. Further, hundreds or even thousands of sets of torque and angle values may be supplied to the ML model for thorough training.

Any acquired torque and angle values may be stored locally in the memory 19 and/or communicated wirelessly via the radio transmitter 16 to the remotely located cloud server 30 or other appropriate device separated from the tool 10, such as a server located on the premises.

In step S102, a tightening class TC is associated with each set of acquired torque and angle values. This tightening class thus identifies the type of tightening operation having been applied to the fasteners. As previously exemplified, the tightening class may include "disengage", "socket slip", stick slip", "thread lock" and "high rundown torque", etc., or any other identified type of tightening operation.

In practice, the operator of the tool 10 typically identifies from the acquired sets of torque and angles values with which particular tightening class a set of measured values is to be associated. For instance, if the observed torque values T and angle values A have the appearance of Figure 2b as presented to the operator via the display 14, the operator concludes that the associated tightening class should be "stick slip" and inputs information identifying the tightening class via the interface 15 to the tool 10.

The identified tightening class is supplied to the ML model for training along with the acquired set of torque and angle values in step S103.

This is typically repeated for a large number of sets of observed torque and angle values, and the ML model will thus be effectively trained in step S103 to associate a tightening class TC with each supplied set of torque and angle values T, A.

While a single-label tightening ML model may be utilized where each set of observed torque and angle values T, A is associated to one tightening class TC only ("stick slip", "socket slip", "thread lock", etc., as discussed above) it may also be envisaged that a multi-label tightening ML model is utilized where each set of observed torque and angle values T, A is associated with a plurality of tightening classes TC1, TC2, ..., TCn, as illustrated in Figure 3.

As an example, it may be envisaged that each of the above illustrated tightening operation types of Figures 2a-d, i.e. "socket slip", stick slip", "thread lock" and "high rundown torque" is defined utilizing a first tightening class TC1, while a second complementing tightening class TC2 is utilized for indicating an OK/NOK tightening operation.

As is understood, the tightening tool 10 can generally indicate an OK/NOK tightening based on predetermined threshold values, while the ML model also may indicate an OK/NOK tightening based on training data. Thus, the OK/NOK assessment of the tightening tool 10 and the ML model, respectively, may be evaluated wherein the ML model provides a second opinion on the performed tightening operation.

For instance, if the tightening tool 10 itself (i.e. the processing unit 17) indicates a NOK operation while the trained ML model indicates an OK operation - or vice versa - there may be an issue and the operator of the tool may be alerted accordingly.

In another example, it may also be that a trace indicates two different types of tightening operations being performed for one and the same trace. For instance, a trace may constitute *both* a "socket slip" and a "stick slip", in which case (at least) two classes are assigned to the trace; TC1 = "socket slip" and TC2 = "stick slip", to indicate that the trace represents both a socket slip operation and a stick slip operation, and even further classes such as TC3 = "thread lock" should that be applicable. Thus, several exclusive tightening classes may correctly be assigned to the same trace in a multi-label setting.

In another example, there are typically two phases during a tightening operation, a first is the rundown phase where the tool 10 operates at a high speed when the resistance of the joint to be tightened by the bolt 10 is low, and a second end-tightening phase where the tool 10 slows as the torquing up proceeds. The end-tightening phase may alternatively be referred to as a torque build-up phase. It may thus be desirable to assign a first tightening class TC1 to the torque and angle values T, A observed for the initial rundown phase (e.g. "OK/NOK"), and a second tightening class TC2 to the torque and angle values T, A of the final end-tightening phase (e.g. "OK/NOK").

In another example, it may be envisaged that multiple tightening classes, such as TC1 and TC2, are associated with a trace where e.g. TC1 categorizes a rundown phase of the trace while TC2 categorizes an end-tightening phase. For instance, it may be envisaged that TC1 = "socket slip rundown" and TC2 = "socket slip end-tightening" for a particular trace.

In addition, a tightening class TC3 may be introduced indicating whether or not the bolt 25 for some reason has been damaged during the tightening operation, and even a tightening class TC4 specifying whether or not there is an indication that a joint to be tightening by the bolt 25 has been damaged. As is understood, numerous tightening classes TC1, TC2, ..., TCn may be associated with a tightening operation.

Thus, as shown in Figure 4, upon a tightening program subsequently being performed by the tool 10, the trained ML model is supplied in step S104 with a further acquired set of observed torque and angle values T, A for the tightening program being performed.

As a result, the trained ML model will advantageously output one or more estimated tightening classes TC1, TC2, ..., TCn for the further set of observed torque and angle values T, A supplied to the trained ML model during the tightening operation, for instance via the display 14 such that the operator can determine whether or not the tightening program is to be re-performed. Hence, the trained ML model will facilitate detection of tightening classes TC from supplied torque and angle values T, A being registered during a tightening operation.

Alternatively, rather than having the control device 20 of the tool 10 performing steps S101-S104, it may be envisaged that torque and angle values T, A are communicated by the tool 10 via transceiver 16 to the cloud server 30 being equipped with a corresponding control device 35 for performing steps S101-S104, which would relieve the processing unit 17 of the tool 10 from computational burden. The cloud server 30 may send information indicating the estimated tightening class to the tool 10 via the transceiver 16, which presents an alert of the tightening class to the operator via the display 14 or audibly via a small speaker included with the tool 10.

In another alternative, the training of the ML model as set out in steps S101-S103 is undertaken by the server 30, which server then supplies the tool 10 with the trained ML model. The tool 10 may then store the trained ML model in the memory 19 and thus locally execute step S104.

It may be envisaged that the cloud server 30 may have access to torque and angle values of a multitude of tightening tools of the same type as the tool 10, thus facilitating training of the ML model with a massive quantity of training data.

As mentioned previously in connection to Figures 2a-d, the rundown phase may last for a rotational angle of the shaft 13 of the tool 10 for thousands of degrees while the end-tightening phase only lasts for tens of degrees.

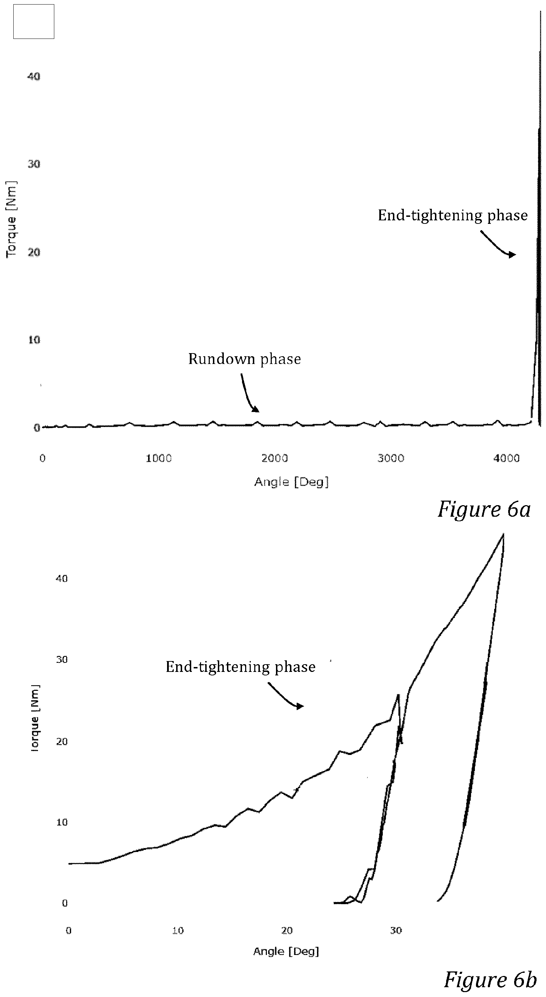

Figure 6a illustrates that the rundown phase last for more than 4000° of the rotational angle, while Figure 6b illustrates that the end-tightening phase only lasts for around 35°. In other words, the range of values of raw data varies widely.

Now, ML models typically execute data which have been normalized to the range [0, 1], since ML models will not work properly with such wide-range data. That is, the data with which the ML model is trained should in practice range from 0 to 1. This is generally known as *feature scaling.* Commonly, min-max normalization is applied where the data is normalized with the total data range.

Generally, min-max normalization of [0, 1] is defined as: $x' = \frac{x - \min(x)}{\max(x) - \min(x)}$ , where x is the original value and x' is the normalized value and max(x) is the maximum value in the range to be normalized, while min(x) is the minimum value in the range to be normalized. In the example above of the angle range of the tightening tool 10, the minimum value is typically zero. With the ML model, the maximum value and the minimum value in the range to be normalized, are computed from a training set of data. Since min-max normalization is highly dependent on the highest and lowest value of the dataset, training data from a tightening operation that has the highest and lowest value may be utilized for determining max(x) and min(x).

Again with reference to Figures 6a and b, assuming that the rotational angle applied in the rundown phase and the end-tightening phase in total is around 4200°, the complete end-tightening phase would be normalised to 35°/4200° = 0.0083, which hence amounts to 0.83% of the total angle range. That is, the end-tightening phase would only constitute 0.83% of the total normalization range, which makes for inefficient ML model training. While Figure 6a shows an applied rotational angle extending up to 4200°, the angle may in practice extended even further, such as up to around 30000° (in which case the angle of 35° would be normalized as 35°/30000° = 0.12%)

This issue is resolved in an embodiment by separating the set of observed torque and angles values that forms a trace in a rundown data subset and an end-tightening data subset. Thereafter, the two subsets - or at least the end-tightening subset - are normalized separately. As is understood, it may be that the end-tightening phase is more relevant to analyse than the rundown phase, in which case the rundown data subset may be discarded.

With the example shown in Figures 6a and b, by separating the rundown phase and the end-tightening phase data into a rundown data subset and an end-tightening data subset and thereafter normalizing the two separate data subsets with the range of the torque and the angle values of each subset, the maximum angle value of the end-tightening phase is min-max normalized as 35/35, rather than as 35/4200, as previously discussed.

Further, as shown in Figure 6a, the torque of the rundown phase, being at about 0.2 Nm, is normalized as 0.2 Nm/0.2 Nm rather than as 0.2 Nm/8 Nm, 8 Nm being the torque range of the total tightening phase (i.e. the maximum torque value applied in the end-tightening phase).

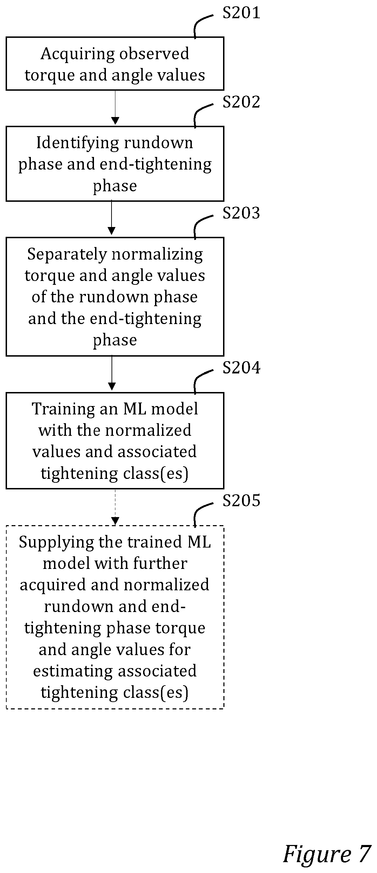

Figure 7 shows a flowchart illustrating a method for estimating a tightening class of a tightening operation performed by the tightening tool 10 according to an embodiment.

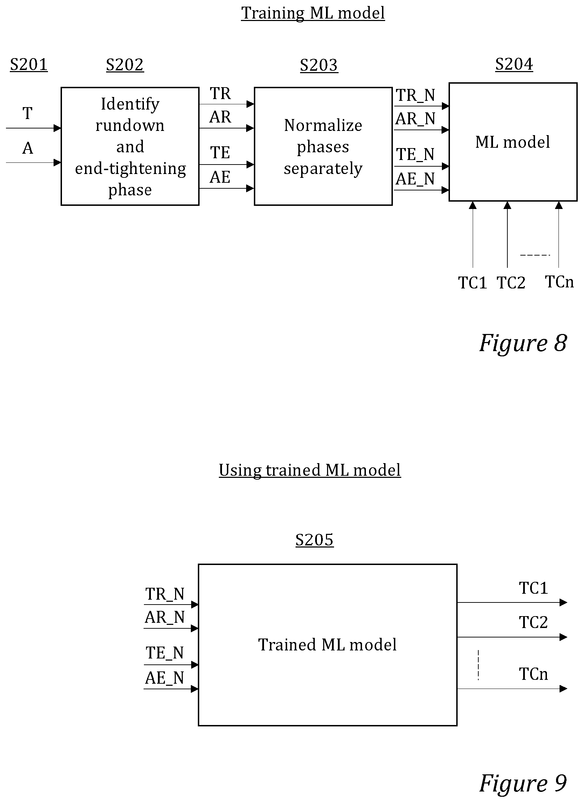

Reference is further made to Figure 8 illustrating the training of the ML model according to an embodiment, while Figure 9 illustrates utilizing the trained ML model to estimate a tightening class for a supplied set of normalized torque and angle values during a tightening operation according to an embodiment.

The normalization is typically performed as a pre-processing procedure before training the ML model according to this embodiment further being illustrated in Figure 7.

Thus, similar to step S101 described with reference to the flowchart of Figure 5, during a training phase, one or more sets of observed torque values T and angle values A for bolts 25 having been tightened by the tightening tool 10 is acquired in step S201.

For instance, each set may comprise, say, a hundred torque values and corresponding angle values acquired by the processing unit 17 upon the tightening tool 10 performing a tightening program. Further, hundreds or even thousands of sets of torque and angle values may ultimately be supplied to the ML model for thorough training.

However, in step S202, the method according to the embodiment identifies the rundown phase and the end-tightening phase of the tightening being performed such that the torque and angle values for each of the two phases can be separated into a rundown subset TR, AR and an end-tightening subset TE, AE.

Thereafter, in step S203:

- the torque and angle values TR, AR of the rundown phase are min-max normalized with the torque value range and the angle value range, respectively, of the rundown phase (being 0.2 Nm and 4200° in the example of Figures 6a and b) resulting in normalized torque and angles values TR_N, AR_N of the rundown phase, while

- the torque and angle values TE, AE of the end-tightening phase are normalized with the torque value range and the angle value range, respectively, of the end-tightening phase (being 8 Nm and 35° in the example of Figures 6a and b) resulting in normalized torque and angles values TE_N, AE_N of the end-tightening phase.

As is understood, while both TR, AR and TE, AE are outputted in the illustration of step S202, it may be envisaged that only TE, AE are outputted in step S202 and normalized in step S203.

In step S204, the sets of normalized torque and angle values TR_N, AR_N and TE_N, AE_N are supplied to the ML model along with one or more tightening classes TC1, TC2, ..., TCn associated with each set of normalized torque and angle values TR_N, AR_N and TE_N, AE_N. Again, it may be envisaged that only TE, AE are normalized and supplied to the ML model in step S204.

This tightening class thus (at least) identifies the type of tightening operation having been applied to the fasteners. As previously exemplified, the tightening class may include "disengage", "socket slip", stick slip", "thread lock" and "high rundown torque", etc., or any other identified type of tightening operation. In this particular example, it may be that TC1 = "socket slip rundown" is associated with normalized rundown set TR_N, AR_N while TC2 = "socket slip end-tightening" is associated with normalized end-tightening set TE_N, AE_N, and potentially further tightening classes such as a third class TC3 indicating whether or not the bolt is damaged, etc.

The identified tightening classes are thus supplied to the ML model for training along with the normalized sets of torque and angle values TR_N, AR_N and TE_N, AE_N in step S204.

This is typically repeated for a large number of sets of observed torque and angle values, and the ML model will thus be effectively trained in step S204 to associate at least one tightening class TC with each supplied normalized set of torque and angle values TR_N, AR_N and TE_N, AE_N.

The trained ML model may subsequently be utilized in step S205 for estimating tightening classes as will be discussed in more detail hereinbelow.

Advantageously, by separating the rundown phase torque and angle values TR, AR from the tightening phase torque and angle values TE, AE and normalizing the two data subsets separately (resulting in the two normalized data subsets TR_N, AR_N and TE_N, AE_N), the resolution of the normalization becomes far greater, in particular for the angle values of the end-tightening phase being normalized over 35° rather than +4000°, but also for the torque values of the rundown phase being normalized over 0.2 Nm rather than 8 Nm.

While Figures 7 and 8 illustrate that the torque and angle values of both the rundown phase and the end-tightening phase TR, AR and TE, AE are normalized in step S203 and supplied to the ML model in step S204, it is envisaged in a further embodiment that only the torque and angle values TE, AE of the end-tightening phase are normalized in step S203 and supplied to the ML model in step S204, in which case the rundown phase torque and angle values TR, AR may be discarded; a given trace is oftentimes characterized by its end-tightening pause, since the rundown phase in many cases have a similar appearance even for differently categorized traces, For instance, turning to Figures 2a and 2b, the rundown phase of a socket slip operation is more or less identical to that of a stick slip operation, but the end-tightening phases are rather different. Hence, it may be that the ML model only is trained with end-tightening phase torque and angle values TE, AE in step S204.

Figure 9 illustrates subsequently using the trained ML model to estimate a tightening class TC for a further acquired set of observed torque and angle values T, A after having identified the rundown and end-tightening phase and separately normalized the torque and angle values of the respective phase, as has been described hereinabove with reference to steps S202 and S203 of Figures 7 and 8, resulting in normalized rundown phase torque and angle values TR_N, AR_N and normalized end-tightening phase torque and angle values TE_N, AE_N being supplied to the trained ML model.

Thus, the normalized rundown phase torque and angle values TR_N, AR_N and normalized end-tightening phase torque and angle values TE_N, AE_N of the further acquired set observed torque and angle values are, as shown in Figure 7, supplied in step S205 to the trained ML model for estimating one or more tightening classes for a bolt being tightening by the tool 10.

Thus, assuming for instance that:

- the normalized rundown phase torque and angle values TR_N, AR_N of the further acquired set indicates a socket slip tightening operation being performed, the trained ML model will indeed output TC1 = "socket slip rundown", and

- the normalized end-tightening phase torque and angle values TE_N, AE_N of the further acquired set indicates a socket slip tightening operation being performed, the trained ML model will indeed output TC2 = "socket slip end-tightening" as a tightening class estimate.

As previously mentioned, it may be that only end-tightening phase data is evaluated by the trained ML model in step S205, in which case the rundown phase data may be discarded before the normalization is undertaken in step S203.

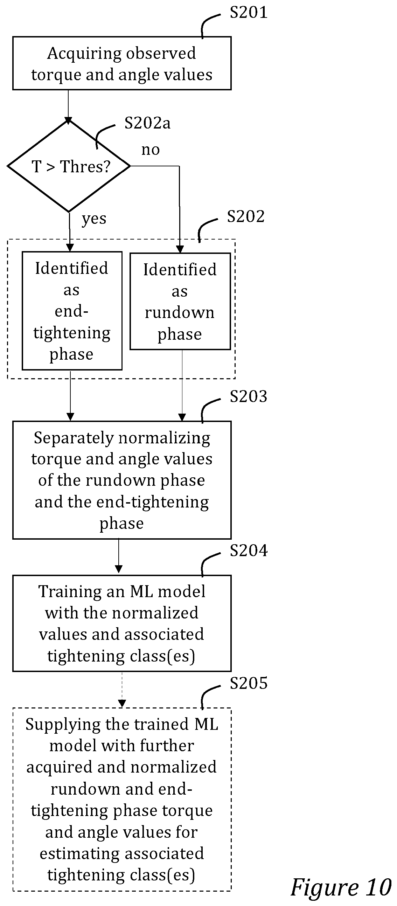

Figure 10 illustrates that the identification of the rundown phase and the end-tightening phase of the tightening of the bolt 25 in step S202 from the set of observed torque and angle values T, A acquired in step S201 is performed in an embodiment by determining in step S202a whether or not the acquired torque values exceed a predetermined torque threshold value Thres.

As previously shown in Figure 6a, the torque is around 0.2 Nm in the rundown phase, and as soon as the end-tightening phase is reached, the torque rapidly increases. Thus, the threshold value Thres may in an example be set to Thres = 0.5 Nm, and for the torque values T (and corresponding angle values A) exceeding that threshold value Thres, the observed torque and angle data T, A is determined to pertain to the end-tightening phase. If not, the observed data T, A is determined to pertain to the rundown phase. Thereafter, the process proceeds with steps S203-S205 as previously described.

As is understood, the determining whether or not a particular part of a trace pertains to the rundown phase or the end-tightening phase may be undertaken by training an ML model. For instance, it may be that the rundown phase and/or the end-tightening phase, respectively, is indicated manually e.g. by an operator and that one or more ML models are trained to distinguish between the two based on this. This may advantageously provide for a separation between the two phases that is more complex and possibly more accurate.

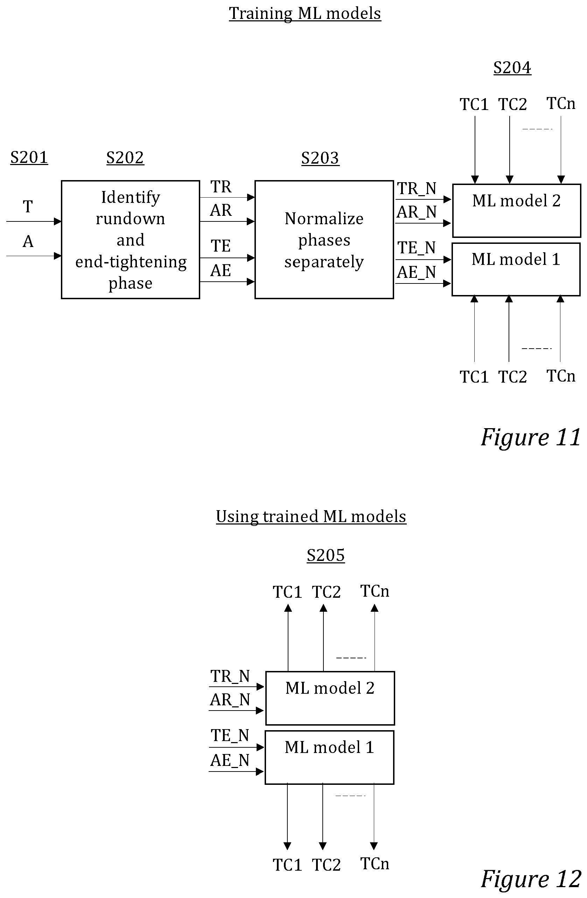

Figure 11 illustrates a further embodiment where a difference from the embodiment of Figure 8 is that the normalized rundown phase torque and angle values TR_N, AR_N and the normalized end-tightening phase torque and angle values TE_N, AE_N are supplied in S204 to different ML models for training, i.e. ML model 2 and ML model 1, respectively, along with associated tightening classes TC1, TC2, ..., TCn.

Advantageously, each of the two ML models 1 and 2 can thus be adapted to the end-tightening phase and the rundown phase, respectively, which results in more accurately trained ML models given the data being inputted for training.

Figure 12 correspondingly illustrates an embodiment where the further acquired and normalized rundown phase torque and angle values TR_N, AR_N and the further acquired and normalized end-tightening phase torque and angle values TE_N, AE_N are supplied in S205 to different trained ML models, i.e. ML model 2 and ML model 1, respectively, for estimating the tightening classes TC1, TC2, ..., TCn.

In a further embodiment, rather than using the complete angle and torque range of each phase for normalization, i.e. in the above given example a determined torque range of 0.2 Nm and an determined angle range of around 4200° for the rundown phase and a torque range of 8 Nm and an angle range of 35° for the end-tightening phase, the normalization may be performed by dividing the data of the rundown phase and/or the data of the end-tightening phase into smaller sub-ranges.

For instance, rather than normalizing over the full angle range for the rundown phase of 4200°, the angle range is divided into, say, 12 sub-ranges where each sub-range thus extends over a range of 4200°/12 = 350°. This provides for a min-max normalization where the resolution of the normalization becomes 12 times higher.

Similarly, the angle range of the end-tightening phase may be divided into smaller sub-ranges such as e.g. 35°/7 = 5°, i.e. resulting in a higher resolution of the normalization.

In embodiments, approaches utilized for training the ML model include neural networks, random forest-based classification, regression analysis, etc. An advantage of neural networks is their ability to learn to extract both temporal and spatial patterns from data sets.

The training of the ML model and the subsequent determining of tightening class for torque and angle values observed during a tightening program may be performed locally by the processing unit 16, or by the cloud server 30. The determined tightening class may be immediately communicated to the operator of the tool 10 via e.g. the display 14. As a consequence, the operator may unscrew the bolt 25 and perform a new tightening program in order to attain an adequate tightening.

It is envisaged that the steps S201-S205 of the method according to embodiments may be performed by the control device 20 arranged in the tool 10 itself. However, it may also be envisaged that torque and angle values and the context data are measured by the tool 10 and then communicated via transmitter 16 to the cloud server 30 being equipped with a corresponding control device 35 for performing the TC estimation and subsequently all steps S201-S205, which would relieve the processing unit 16 from the computational burden.

If may further be envisaged that the tool 10 performs all steps S201-S205 and then alerts the cloud server 30 of the estimation of the tightening class (possibly along with alerting the operator), which may hold a database accordingly, or provides the alert e.g. to a supervision control room.

The aspects of the present disclosure have mainly been described above with reference to a few embodiments and examples thereof. However, as is readily appreciated by a person skilled in the art, other embodiments than the ones disclosed above are equally possible within the scope of the invention, as defined by the appended patent claims.

Thus, while various aspects and embodiments have been disclosed herein, other aspects and embodiments will be apparent to those skilled in the art. The various aspects and embodiments disclosed herein are for purposes of illustration and are not intended to be limiting, with the true scope being defined by the following claims.

**Claims**

1. A method for enabling determination of a tightening class of a tightening operation performed by a tightening tool (10), the method comprising:

   acquiring (S201) a set of observed torque and angle values for a fastener (25) having been tightened by the tightening tool (10);
   **characterized in that** the method further comprises identifying (S202), from the acquired set of observed torque and angle values, a rundown phase and an end-tightening phase of the tightening of the fastener (25);

normalizing (S203) the torque values of the end-tightening phase with a determined torque value range of the end-tightening phase and the angle values of the end-tightening phase with a determined angle value range of the end-tightening phase; and

training (S204) a machine-learning model with the normalized torque and angle values of the end-tightening phase and at least one tightening class associated with the normalized torque and angle values of the end-tightening phase, the tightening class identifying a type of tightening operation having been applied to the fastener (25).

2. The method of claim 1, further comprising:
supplying (S205) the trained machine-learning model with a further acquired and normalized set of observed end-tightening phase torque and angle values for a fastener having been tightened by the tightening tool (10), wherein the trained machine-learning model outputs at least one estimated tightening class for the supplied further normalized set of observed end-tightening phase torque and angle values.

3. The method of claims 1 or 2, further comprising:
determining (S202a) whether or not the acquired torque values exceed a predetermined torque threshold value; and if so:
the acquired torque values and corresponding angle values are determined to pertain to an end-tightening phase; and if not:
the acquired torque values and corresponding angle values are determined to pertain to a rundown phase, upon identifying (S202), from the acquired set of observed torque and angle values, a rundown phase and an end-tightening phase of the tightening of the fastener (25).

4. The method of any one of the preceding claims, wherein the normalizing (S203) further comprises:
normalizing (S203) the torque values of the rundown phase with a determined torque value range of the rundown phase and the angle values of the rundown phase with a determined angle value range of the rundown phase; and the training (S204) of the machine-learning model further comprises:
training (S204) the machine-learning model with the normalized torque and angle values of the rundown phase and at least one tightening class associated with the normalized torque and angle values of the rundown phase.

5. The method of claim 4, wherein the supplying (S205) of the trained machine-learning model with a further acquired and normalized set of observed end-tightening phase torque and angle values further comprises:

supplying the trained machine-learning model with a further acquired and normalized set of observed rundown phase torque and angle values for a fastener having been tightened by the tightening tool (10), wherein the trained machine-learning model outputs at least one estimated tightening class for the supplied further normalized set of observed rundown phase torque and angle values.

6. The method of claims 4 or 5, wherein the training (S204) of the machine-learning model further comprises:

training a first machine-learning model with the normalized torque and angle values of the end-tightening phase and at least one tightening class associated with the normalized torque and angle values of the end-tightening phase; and
training a second machine-learning model with the normalized torque and angle values of the rundown phase and at least one tightening class associated with the normalized torque and angle values of the rundown phase.

7. The method of claims 5 and 6, wherein the supplying (S205) of the trained machine-learning model with a further acquired and normalized set of observed end-tightening phase torque and angle values further comprises:

supplying the trained first machine-learning model with the further acquired and normalized set of observed end-tightening phase torque and angle values, wherein the trained first machine-learning model outputs at least one estimated tightening class for the supplied further normalized set of observed end-tightening phase torque and angle values; and
supplying the trained second machine-learning model with the further acquired and normalized set of observed rundown phase torque and angle values, wherein the trained second machine-learning model outputs at least one estimated tightening class for the supplied further normalized set of observed rundown phase torque and angle values.

8. The method of any one of the preceding claims, the determined torque value range and/or angle value range being divided into smaller sub-ranges utilized for the normalization.

9. The method of any one of the preceding claims, the normalization being performed comprising min-max normalization.

10. The method of any one of the preceding claims, further comprising providing an alert indicating the at least one estimated tightening class.

11. The method of claim 10, wherein the alert is provided to an operator of the tightening tool (10), to the tightening tool (10) itself, to a supervision control room or to a remote cloud function (30).

12. A computer program (18, 33) comprising computer-executable instructions for causing the device (20, 35) of any one of claims 14 or 15 to perform the method recited in any one of claims 1-11 when the computer-executable instructions are executed on a processing unit (17, 32) included in the device (20, 35).

13. A computer program product comprising a computer readable medium (19, 34), the computer readable medium having the computer program (18, 33) according to claim 12 embodied thereon.

14. A device (20, 35) configured to enable determination of a tightening class of a tightening operation performed by a tightening tool (10), the device (20, 35) comprising a processing unit (17, 32) operative to cause the device (20, 35) to:

acquire (S201) a set of observed torque and angle values for a fastener (25) having been tightened by the tightening tool (10);
**characterized in that** the processing unit is configured to identify (S202), from the acquired set of observed torque and angle values, a rundown phase and an end-tightening phase of the tightening of the fastener (25);
normalize (S203) the torque values of the end-tightening phase with a determined torque value range of the end-tightening phase and the angle values of the end-tightening phase with a determined angle value range of the end-tightening phase; and to
train (S204) a machine-learning model with the normalized torque and angle values of the end-tightening phase and at least one tightening class associated with the normalized torque and angle values of the end-tightening phase, the tightening class identifying a type of tightening operation having been applied to the fastener (25).

15. The device (20, 35) of claim 14, further being operative to:
supply (S205) the trained machine-learning model with a further acquired and normalized set of observed end-tightening phase torque and angle values for a fastener having been tightened by the tightening tool (10), wherein the trained machine-learning model outputs at least one estimated tightening class for the supplied further normalized set of observed end-tightening phase torque and angle values.

**Patentansprüche**

1. Verfahren zum Bestimmen einer Festziehklasse eines Festziehvorgangs, der durch ein Festziehwerkzeug (10) durchgeführt wird, das Verfahren umfassend:

Erfassen (S201) eines Satzes von beobachteten Drehmoment- und Winkelwerten für ein Befestigungselement (25), das durch das Festziehwerkzeug (10) festgezogen wurde;
**dadurch gekennzeichnet, dass** das Verfahren ferner das Identifizieren (S202) einer Auslaufphase und einer Endfestziehphase des Festziehens des Befestigungselements (25) aus dem erfassten Satz von beobachteten Drehmoment- und Winkelwerten umfasst;
Normalisieren (S203) der Drehmomentwerte der Endfestziehphase mit einem bestimmten Drehmomentwertebereich der Endfestziehphase und der Winkelwerte der Endfestziehphase mit einem bestimmten Winkelwertebereich der Endfestziehphase; und
Trainieren (S204) eines Maschinenlernmodells mit den normalisierten Drehmoment- und Winkelwerten der Endfestziehphase und mindestens einer Festziehklasse, die den normalisierten Drehmoment- und Winkelwerten der Endfestziehphase zugeordnet ist, wobei die Festziehklasse eine Art von Festziehvorgang identifiziert, der auf das Befestigungselement (25) angewendet wurde.

2. Verfahren nach Anspruch 1, ferner umfassend:
Versorgen (S205) des trainierten Maschinenlernmodells mit einem weiteren erfassten und normalisierten Satz von beobachteten Drehmoment- und Winkelwerten der Endfestziehphase für ein Befestigungselement, das mit dem Festziehwerkzeug (10) festgezogen wurde, wobei das trainierte Maschinenlernmodell mindestens eine geschätzte Festziehklasse für den weiteren normalisierten Versorgungssatz von beobachteten Drehmoment- und Winkelwerten der Endfestziehphase ausgibt.

3. Verfahren nach Anspruch 1 oder 2, ferner umfassend:
Bestimmen (S202a), ob die erfassten Drehmomentwerte einen vorbestimmten Drehmomentschwellenwert überschreiten oder nicht; und wenn ja: die erfassten Drehmomentwerte und die entsprechenden Winkelwerte so bestimmt werden, dass sie zu einer Endfestziehphase gehören; und wenn nicht: die erfassten Drehmomentwerte und die entsprechenden Winkelwerte, nach dem Identifizieren (S202) einer Auslaufphase und einer Endfestziehphase des Festziehens des Befestigungselements (25) aus dem erfassten Satz von beobachteten Drehmoment- und Winkelwerten, als zu einer Auslaufphase gehörend bestimmt werden.

4. Verfahren nach einem der vorstehenden Ansprüche, wobei das Normalisieren (S203) ferner umfasst: Normalisieren (S203) der Drehmomentwerte der Auslaufphase mit einem bestimmten Drehmomentwertebereich der Auslaufphase und der Winkelwerte der Auslaufphase mit einem bestimmten Winkelwertebereich der Auslaufphase; und das Trainieren (S204) des Maschinenlernmodells ferner umfasst: Trainieren (S204) eines Maschinenlernmodells mit den normalisierten Drehmoment- und Winkelwerten der Auslaufphase und mindestens einer Festziehklasse, die den normalisierten Drehmoment- und Winkelwerten der Auslaufphase zugeordnet ist.

5. Verfahren nach Anspruch 4, wobei das Versorgen (S205) des trainierten Maschinenlernmodells mit einem weiteren erfassten und normalisierten Satz von beobachteten Drehmoment- und Winkelwerten der Endfestziehphase ferner umfasst: Versorgen des trainierten Maschinenlernmodells mit einem weiteren erfassten und normalisierten Satz von beobachteten Drehmoment- und Winkelwerten der Auslaufphase für ein Befestigungselement, das mit dem Festziehwerkzeug (10) festgezogen wurde, wobei das trainierte Maschinenlernmodell mindestens eine geschätzte Festziehklasse für den weiteren normalisierten Versorgungssatz von beobachteten Drehmoment- und Winkelwerten der Auslaufphase ausgibt.

6. Verfahren nach Anspruch 4 oder 5, wobei das Trainieren (S204) des Maschinenlernmodells ferner umfasst:

    Trainieren eines ersten Maschinenlernmodells mit den normalisierten Drehmoment- und Winkelwerten der Endfestziehphase und mindestens einer Festziehklasse, die den normalisierten Drehmoment- und Winkelwerten der Endfestziehphase zugeordnet ist; und Trainieren eines zweiten Maschinenlernmodells mit den normalisierten Drehmoment- und Winkelwerten der Auslaufphase und mindestens einer Festziehklasse, die den normalisierten Drehmoment- und Winkelwerten der Auslaufphase zugeordnet ist.

7. Verfahren nach den Ansprüchen 5 und 6, wobei das Versorgen (S205) des trainierten Maschinenlernmodells mit einem weiteren erfassten und normalisierten Satz von beobachteten Drehmoment- und Winkelwerten der Endfestziehphase ferner umfasst:

    Versorgen des trainierten ersten Maschinenlernmodells mit dem weiteren erfassten und normalisierten Satz von beobachteten Drehmoment- und Winkelwerte der Endfestziehphase, wobei das trainierte erste Maschinenlernmodell mindestens eine geschätzte Festziehklasse für den weiteren normalisierten Versorgungssatz von beobachteten Drehmoment- und Winkelwerten der Endfestziehphase ausgibt; und Versorgen des trainierten zweiten Maschinenlernmodells mit dem weiteren erfassten und normalisierten Satz von beobachteten Drehmoment- und Winkelwerte der Auslaufphase, wobei das trainierte zweite Maschinenlernmodell mindestens eine geschätzte Festziehklasse für den weiteren normalisierten Versorgungssatz von beobachteten Drehmoment- und Winkelwerten der Auslaufphase ausgibt.

8. Verfahren nach einem der vorstehenden Ansprüche, wobei der bestimmte Drehmomentwertebereich und/oder Winkelwertebereich in kleinere Unterbereiche unterteilt wird, die für die Normalisierung verwendet werden.

9. Verfahren nach einem der vorstehenden Ansprüche, wobei die durchgeführte Normalisierung eine Min-Max-Normalisierung umfasst.

10. Verfahren nach einem der vorstehenden Ansprüche, ferner umfassend das Bereitstellen einer Warnung, die die mindestens eine geschätzte Festziehklasse angibt.

11. Verfahren nach Anspruch 10, wobei die Warnung einem Bediener des Festziehwerkzeugs (10), dem Festziehwerkzeug (10) selbst, einer Überwachungssteuerzentrale oder einer Remote-Cloud-Funktion (30) bereitgestellt wird.

12. Computerprogramm (18, 33), umfassend computerausführbare Anweisungen zum Veranlassen, dass die Vorrichtung (20, 35) nach einem der Ansprüche 14 oder 15 das in einem der Ansprüche 1 bis 11 angegebene Verfahren durchführt, wenn die computerausführbaren Anweisungen auf einer Verarbeitungseinheit (17, 32), die in der Vorrichtung (20, 35) eingeschlossen ist, ausgeführt werden.

13. Computerprogrammprodukt, umfassend ein computerlesbares Medium (19, 34), wobei das computerlesbare Medium das Computerprogramm (18, 33) nach Anspruch 12 darauf verkörpert aufweist.

14. Vorrichtung (20, 35), die konfiguriert ist, um eine Festziehklasse eines durch ein Festziehwerkzeug (10) durchgeführten Festziehvorgangs zu ermöglichen, wobei die Vorrichtung (20, 35) eine Verarbeitungseinheit (17, 32) umfasst, die dazu dient, die Vorrichtung (20, 35) zu Folgendem zu veranlassen:

Erfassen (S201) eines Satzes von beobachteten Drehmoment- und Winkelwerten für ein Befestigungselement (25), das durch das Festziehwerkzeug (10) festgezogen wurde; **dadurch gekennzeichnet, dass** die Verarbeitungseinheit konfiguriert ist zum Identifizieren (S202) einer Auslaufphase und einer Endfestziehphase des Festziehens des Befestigungselements (25) aus dem erfassten Satz von beobachteten Drehmoment- und Winkelwerten; Normalisieren (S203) der Drehmomentwerte der Endfestziehphase mit einem bestimmten Drehmomentwertebereich der Endfestziehphase und der Winkelwerte der Endfestziehphase mit einem bestimmten Winkelwertebereich der Endfestziehphase; und zum Trainieren (S204) eines Maschinenlernmodells mit den normalisierten Drehmoment- und Winkelwerten der Endfestziehphase und mindestens einer Festziehklasse, die den normalisierten Drehmoment- und Winkelwerten der Endfestziehphase zugeordnet ist, wobei die Festziehklasse eine Art von Festziehvorgang identifiziert, der auf das Befestigungselement (25) angewendet wurde.

15. Vorrichtung (20, 35) nach Anspruch 14, die ferner dient zum:
Versorgen (S205) des trainierten Maschinenlernmodells mit einem weiteren erfassten und normalisierten Satz von beobachteten Drehmoment- und Winkelwerten der Endfestziehphase für ein Befestigungselement, das mit dem Festziehwerkzeug (10) festgezogen wurde, wobei das trainierte Maschinenlernmodell mindestens eine geschätzte Festziehklasse für den weiteren normalisierten Versorgungssatz von beobachteten Drehmoment- und Winkelwerten der Endfestziehphase ausgibt.

**Revendications**

1. Procédé permettant une détermination d'une classe de serrage d'une opération de serrage effectuée par un outil de serrage (10), le procédé comprenant :

l'acquisition (S201) d'un ensemble de valeurs de couple et d'angle observées pour un élément de fixation (25) ayant été serré par l'outil de serrage (10) ;
**caractérisé en ce que** le procédé comprend en outre l'identification (S202), à partir de l'ensemble acquis de valeurs de couple et d'angle observées, d'une phase de ralentissement et d'une phase de fin de serrage du serrage de l'élément de fixation (25) ;
la normalisation (S203) des valeurs de couple de la phase de fin de serrage avec une plage de valeurs de couple déterminée de la phase de fin de serrage et des valeurs d'angle de la phase de fin de serrage avec une plage de valeurs d'angle déterminée de la phase de fin de serrage ; et
l'entraînement (S204) d'un modèle d'apprentissage automatique avec les valeurs de couple et d'angle normalisées de la phase de fin de serrage et au moins une classe de serrage associée aux valeurs de couple et d'angle normalisées de la phase de fin de serrage, la classe de serrage identifiant un type d'opération de serrage ayant été appliqué à l'élément de fixation (25).

2. Procédé selon la revendication 1, comprenant en outre :
la fourniture (S205), au modèle d'apprentissage automatique entraîné, d'un autre ensemble acquis et normalisé de valeurs de couple et d'angle de phase de fin de serrage observées pour un élément de fixation ayant été serré par l'outil de serrage (10), dans lequel le modèle d'apprentissage automatique entraîné produit au moins une classe de serrage estimée pour l'autre ensemble normalisé fourni de valeurs de couple et d'angle de phase de fin de serrage observées.

3. Procédé selon les revendications 1 ou 2, comprenant en outre :
le fait de déterminer (S202a) si les valeurs de couple acquises dépassent ou non une valeur seuil de couple prédéterminée ; et si tel est le cas :
les valeurs de couple acquises et des valeurs d'angle correspondantes sont déterminées comme se rapportant à une phase de fin de serrage ; et si ce n'est pas le cas :
les valeurs de couple acquises et des valeurs d'angle correspondantes sont déterminées comme se rapportant à une phase de ralentissement, après identification (S202), à partir de l'ensemble acquis de valeurs de couple et d'angle observées, d'une phase de ralentissement et d'une phase de fin de serrage du serrage de l'élément de fixation (25).

4. Procédé selon l'une quelconque des revendications précédentes, dans lequel la normalisation (S203) comprend en outre :
la normalisation (S203) des valeurs de couple de la phase de ralentissement avec une plage de valeurs de couple déterminée de la phase de ralentissement et des valeurs d'angle de la phase de ralentissement avec une plage de valeurs d'angle déterminée de la phase de ralentissement ; et l'entraînement (S204) du modèle d'apprentissage automatique comprend en outre :

l'entraînement (S204) du modèle d'apprentissage automatique avec les valeurs de couple et d'angle normalisées de la phase de ralentissement et au moins une classe de serrage associée aux valeurs de couple et d'angle normalisées de la phase de ralentissement.

5. Procédé selon la revendication 4, dans lequel la fourniture (S205), au modèle d'apprentissage automatique entraîné, d'un autre ensemble acquis et normalisé de valeurs de couple et d'angle observées de phase de fin de serrage comprend en outre :
la fourniture, au modèle d'apprentissage automatique entraîné, d'un autre ensemble acquis et normalisé de valeurs de couple et d'angle de phase de ralentissement observées pour un élément de fixation ayant été serré par l'outil de serrage (10), dans lequel le modèle d'apprentissage automatique entraîné produit au moins une classe de serrage estimée pour l'autre ensemble normalisé fourni de valeurs de couple et d'angle de phase de ralentissement observées.

6. Procédé selon les revendications 4 ou 5, dans lequel l'entraînement (S204) du modèle d'apprentissage automatique comprend en outre :

l'entraînement d'un premier modèle d'apprentissage automatique avec les valeurs de couple et d'angle normalisées de la phase de fin de serrage et au moins une classe de serrage associée aux valeurs de couple et d'angle normalisées de la phase de fin de serrage ; et
l'entraînement d'un second modèle d'apprentissage automatique avec les valeurs de couple et d'angle normalisées de la phase de ralentissement et au moins une classe de serrage associée aux valeurs de couple et d'angle normalisées de la phase de ralentissement.

7. Procédé selon les revendications 5 et 6, dans lequel la fourniture (S205), au modèle d'apprentissage automatique entraîné, d'un autre ensemble acquis et normalisé de valeurs de couple et d'angle de phase de fin de serrage observées comprend en outre :

la fourniture, au premier modèle d'apprentissage automatique entraîné, de l'autre ensemble acquis et normalisé de valeurs de couple et d'angle de phase de fin de serrage observées, dans lequel le premier modèle d'apprentissage automatique entraîné produit au moins une classe de serrage estimée pour l'autre ensemble normalisé fourni de valeurs de couple et d'angle de phase de fin de serrage observées ; et

la fourniture, au second modèle d'apprentissage automatique entraîné, de l'autre ensemble normalisé et acquis de valeurs de couple et d'angle de phase de ralentissement observées, dans lequel le second modèle d'apprentissage automatique entraîné produit au moins une classe de serrage estimée pour l'autre ensemble normalisé fourni de valeurs de couple et d'angle de phase de ralentissement observées.

8. Procédé selon l'une quelconque des revendications précédentes, la plage de valeurs de couple et/ou la plage de valeurs d'angle déterminées étant divisées en sous-plages plus petites utilisées pour la normalisation.

9. Procédé selon l'une quelconque des revendications précédentes, la normalisation effectuée comprenant la normalisation min-max.

10. Procédé selon l'une quelconque des revendications précédentes, comprenant en outre la fourniture d'une alerte indiquant l'au moins une classe de serrage estimée.

11. Procédé selon la revendication 10, dans lequel l'alerte est fournie à un opérateur de l'outil de serrage (10), à l'outil de serrage (10) lui-même, à une salle de commande de supervision ou à une fonction nuage à distance (30).

12. Programme informatique (18, 33) comprenant des instructions exécutables par ordinateur destinées à amener le dispositif (20, 35) selon l'une quelconque des revendications 14 à 15 à effectuer le procédé selon l'une quelconque des revendications 1 à 11 lorsque les instructions exécutables par ordinateur sont exécutées sur une unité de traitement (17, 32) incluse dans le dispositif (20, 35).

13. Produit-programme informatique comprenant un support lisible par ordinateur (19, 34), le support lisible par ordinateur ayant le programme informatique (18, 33) selon la revendication 12 intégré sur celui-ci.

14. Dispositif (20, 35) configuré pour permettre une détermination d'une classe de serrage d'une opération de serrage effectuée par un outil de serrage (10), le dispositif (20, 35) comprenant une unité de traitement (17, 32) fonctionnelle pour amener le dispositif (20, 35) à :

acquérir (S201) un ensemble de valeurs de couple et d'angle observées pour un élément de fixation (25) ayant été serré par l'outil de serrage (10) ;

**caractérisé en ce que** l'unité de traitement est configurée pour identifier (S202), à partir de l'ensemble acquis de valeurs de couple et d'angle observées, une phase de ralentissement et une phase de fin de serrage du serrage de l'élément de fixation (25) ;

normaliser (S203) les valeurs de couple de la phase de fin de serrage avec une plage de valeurs de couple déterminée de la phase de fin de serrage et les valeurs d'angle de la phase de fin de serrage avec une plage de valeurs d'angle déterminée de la phase de fin de serrage ; et pour

entraîner (S204) un modèle d'apprentissage automatique avec les valeurs de couple et d'angle normalisées de la phase de fin de serrage et au moins une classe de serrage associée aux valeurs de couple et d'angle normalisées de la phase de fin de serrage, la classe de serrage identifiant un type d'opération de serrage ayant été appliqué à l'élément de fixation (25).

15. Dispositif (20, 35) selon la revendication 14, fonctionnel en outre pour :

fournir (S205), au modèle d'apprentissage automatique entraîné, un autre ensemble acquis et normalisé de valeurs de couple et d'angle de phase de fin de serrage observées pour un élément de fixation ayant été serré par l'outil de serrage (10), dans lequel le modèle d'apprentissage automatique entraîné produit au moins une classe de serrage estimée pour l'autre ensemble normalisé fourni de valeurs de couple et d'angle de phase de fin de serrage observées.

*Figure 1*

*Figure 2a*

*Figure 2b*

Torque

Thread lock

Angle

*Figure 2c*

Torque

High rundown torque

Angle

*Figure 2d*

Training ML model

*Figure 3*

Using trained ML model

*Figure 4*

S101

Acquiring observed
torque and angle values

S102

Associating one or more
tightening classes with
the acquired values

S103

Training an ML model
with the acquired values
and the associated
tightening class(es)

S104

Supplying the trained ML
model with a further
acquired torque and
angle values for
estimating associated
tightening class(es)

*Figure 5*

Figure 6a

Figure 6b

S201

Acquiring observed
torque and angle values

S202

Identifying rundown
phase and end-tightening
phase

S203

Separately normalizing
torque and angle values
of the rundown phase
and the end-tightening
phase

S204

Training an ML model
with the normalized
values and associated
tightening class(es)

S205

Supplying the trained ML
model with further
acquired and normalized
rundown and end-
tightening phase torque
and angle values for
estimating associated
tightening class(es)

*Figure 7*

Training ML model

*Figure 8*

Using trained ML model

*Figure 9*

S201

Acquiring observed
torque and angle values

S202a

T > Thres?

no

yes

S202

Identified
as
end-
tightening
phase

Identified
as
rundown
phase

S203

Separately normalizing
torque and angle values
of the rundown phase
and the end-tightening
phase

S204

Training an ML model
with the normalized
values and associated
tightening class(es)

S205

Supplying the trained ML
model with further
acquired and normalized
rundown and end-
tightening phase torque
and angle values for
estimating associated
tightening class(es)

*Figure 10*

Training ML models

S204

TC1  TC2     TCn

S201        S202                  S203

T                                          TR_N
            Identify     TR              ML model 2
            rundown    AR     Normalize  AR_N
T            and               phases
A           end-tightening  TE  separately  TE_N
            phase      AE              ML model 1
                                       AE_N

TC1  TC2     TCn

*Figure 11*

Using trained ML models

S205

TC1  TC2   TCn

TR_N
            ML model 2
AR_N

TE_N
            ML model 1
AE_N

TC1  TC2   TCn

*Figure 12*